# FASCICULE DE BREVET EUROPEEN

(11) **EP 1 346 547 B1**
(45) Date de publication et mention de la délivrance du brevet: **07.03.2007**
(21) Numéro de dépôt: 01995792.7
(22) Date de dépôt: 24.12.2001
(51) Int. Cl.: H04L 29/06, H04L 12/28

(54) **SYSTEME DE GESTION D'INFORMATIONS EN TEMPS REEL, POUR UN RESEAU COMPORTANT UN ENSEMBLE HETEROGENE DE TERMINAUX, SERVEUR ET TERMINAL PRINCIPAL POUR UN TEL SYSTEME**
SYSTEM ZUR VERWALTUNG VON INFORMATIONEN IN ECHTZEIT, FÜR EINEN NETZWERK MIT HETEROGER ENDGERÄTE, SERVER UND HAUPTENDGERÄT FÜR DIESES SYSTEM
REAL-TIME DATA MANAGEMENT SYSTEM FOR A NETWORK COMPRISING A HETEROGENEOUS SET OF TERMINALS, SERVER AND MAIN TERMINAL FOR SUCH A SYSTEM

(30) Priorité: 26.12.2000 FR 0017062
(43) Date de publication de la demande: 24.09.2003
(73) Titulaire: FRANCE TELECOM, 75015 Paris (FR)
(72) Inventeur: LE CORRE, Hervé, F-14930 Eterville (FR)
(74) Mandataire: Habasque, Etienne J. Jean-François
(86) Numéro de dépôt international: PCT/FR2001/004194
(87) Numéro de publication internationale: WO 2002/052812

(56) Documents cités:
- EP-A- 1 017 210

## Description

La présente invention concerne un système de gestion d'informations, un serveur et un terminal principal pour un tel système.

Plus précisément, l'invention concerne un système de gestion d'informations pour un réseau local de transmission d'informations comportant des terminaux présentant des capacités de traitement d'informations différentes.

Il existe dans le domaine de la gestion des appels téléphoniques des systèmes tels que celui décrit par le document EP-A-1 017 810 permettant de router un appel vers un terminal adapté pour son traitement en fonction de la seule nature de l'appel.

Cependant, ces systèmes sont limités à un routage en fonction de la nature de l'appel et ne sont donc pas adaptés pour les réseaux de transfert d'informations de type Internet dans lesquels la nature des appels n'est aucunement significative des capacités de traitement requises pour le traitement.

Généralement, un système de gestion d'informations du type précité s'applique à des informations circulant entre les terminaux du réseau local, mais aussi à des informations reçues par le réseau local à destination d'au moins un terminal de ce réseau et à des informations émises par au moins un des terminaux du réseau à destination, par exemple, d'un serveur ou d'un réseau extérieur.

Notamment, lorsqu'un terminal du réseau local transmet une requête d'informations à un serveur comportant un moteur de recherche d'informations multimédia dans des bases de données accessibles par le réseau Internet, il reçoit en retour, de la part du serveur, des informations correspondant à sa requête et se présentant par exemple sous la forme d'une multitude de fichiers de données de formats et de tailles différents.

Lors de ces opérations, le système de gestion d'informations du réseau local se charge de la transmission de la requête d'informations à destination du serveur et de la transmission des fichiers retournés au terminal.

Lorsque ce système s'applique à un réseau local comportant des terminaux différents dont certains sont à capacité de traitement d'informations limitée, tout en étant adaptés pour transmettre des requêtes d'informations, notamment des terminaux mobiles, ceux-ci ne sont pas nécessairement capables de traiter les fichiers qui leur sont retournés en réponse à une requête qu'ils ont émise.

On notera que, par traitement des fichiers, on entend, en particulier, la présentation à un utilisateur, des informations qu'ils contiennent.

L'invention vise à remédier aux inconvénients d'un système de gestion d'informations classique de ce type en créant un système de gestion d'informations capable de gérer les informations émises ou reçues par le réseau local, en tenant compte, au mieux, des différentes capacités de traitement des terminaux de ce réseau.

L'invention a donc pour objet un système de gestion d'informations, pour un réseau local de transmission d'informations comportant des terminaux présentant des capacités de traitement d'informations différentes, comportant au niveau du réseau local, dans un terminal principal prédéterminé, des premiers moyens de détermination de la composition en terminaux du réseau local, afin de déterminer leur nature et leur capacité de traitement d'informations, caractérisé en ce que ledit terminal principal prédéterminé est relié par un réseau externe à un serveur comportant :
- des moyens de recherche d'informations sur le Web en fonction d'une requête émise par le terminal principal ;
- des moyens d'analyse des informations à émettre, en réponse à ladite requête, à destination dudit réseau local ;
- des seconds moyens de détermination du ou des terminaux les plus appropriés pour le traitement de ces informations, en fonction de la capacité de traitement d'informations de chacun de ceux-ci, déterminée par les premiers moyens de détermination et des informations délivrées par les moyens d'analyse des informations à émettre ; et
- des moyens de routage de ces informations permettant de les émettre vers le ou les terminaux les plus appropriés tels que déterminés précédemment.

Ainsi, le système de gestion d'informations selon l'invention permet, après analyse des informations émises à destination du réseau local, de diriger ces informations vers le ou les terminaux les plus appropriés au traitement de celles-ci, grâce à la connaissance qu'il possède de la composition en terminaux du réseau local et de leur capacité de traitement d'informations respective.

Le système de gestion d'informations selon l'invention peut en outre comporter une ou plusieurs des caractéristiques suivantes :
- les informations émises à destination du réseau local comportent plusieurs portions d'informations de tailles et de formats spécifiques pour chacune d'entre elles, et les seconds moyens de détermination sont des moyens de détermination, pour chacune de ces portions d'informations, du terminal le plus approprié pour le traitement de cette portion d'informations, en fonction de la capacité de traitement d'informations de chacun des terminaux, lesdits moyens de routage étant adaptés pour transmettre chaque portion d'informations au terminal le plus approprié tel que déterminé précédemment.
- les moyens d'analyse des informations émises à destination du réseau local sont des moyens d'analyse de formats et de tailles associés à ces informations ;
- les terminaux sont de natures différentes ;
- il comporte des moyens de transmission d'informations en provenance d'une partie des terminaux du réseau local vers des moyens de stockage accessibles par le réseau externe ;
- les premiers moyens de détermination sont associés à des moyens de constitution automatique du réseau local comportant des moyens de détection de terminaux dans un voisinage prédéterminé du terminal principal, et des moyens de raccordement de ces terminaux et du terminal principal entre eux ;
- les moyens de constitution automatique du réseau local comportent des moyens d'activation des premiers moyens de détermination, dès l'apparition d'un changement dans la composition de ce réseau local ;
- le terminal principal est un terminal mobile et
- le terminal principal comporte les moyens de constitution automatique du réseau local et des moyens de transmission, de la composition en terminaux du réseau local aux seconds moyens de détermination du ou des terminaux les plus appropriés.

L'invention a également pour objets :
- un serveur tel que décrit dans la revendication 10 ; et
- un terminal tel que décrit dans la revendication 11.

L'invention sera mieux comprise à la lecture de la description qui va suivre, donnée uniquement à titre d'exemple et faite en se référant aux dessins annexés, sur lesquels :
- la Fig.1 est une vue schématique de la structure générale d'un système de gestion d'informations, selon un mode de réalisation particulier de l'invention ;
- la Fig.2 est une vue schématique montrant les échanges d'informations entre les éléments constituant le système de gestion d'informations représenté à la figure 1, lors du traitement d'une requête d'informations émise par un terminal du système ;
- la Fig.3 représente, sous forme d'un organigramme, un procédé de gestion d'une requête d'informations par un serveur, mis en oeuvre dans un système de gestion d'informations selon l'invention ; et
- la Fig.4 est une vue schématique montrant les échanges d'informations entre les éléments constituant le système de gestion d'informations représenté à la figure 1, lors de la transmission d'informations émises par une partie des terminaux du système.

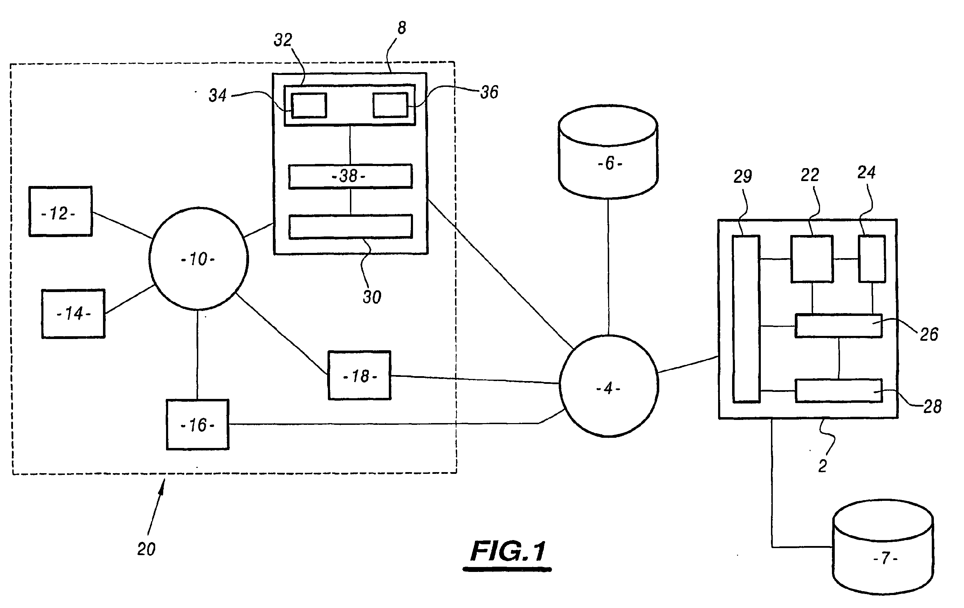

Le système de gestion d'informations représenté à la figure 1 comporte un serveur 2 connecté à un réseau externe 4 de transmission d'informations.

Dans cet exemple, le réseau externe 4 est, de façon classique, un ensemble de réseaux hétérogènes interconnectés entre eux, comportant entre autres, le réseau Internet, un réseau téléphonique commuté, un réseau de type UMTS. La connexion du serveur 2 au réseau 4 est établie de façon classique au moyen d'un modem (non représenté) lui-même connecté à une liaison d'accès au réseau 4.

Le serveur 2 a ainsi accès à des informations stockées dans des moyens de stockage 6, constitués ici par la Toile d'Araignée Mondiale, classiquement appelée Web.

Le serveur 2 est en outre relié localement à des moyens de stockage 7, comprenant par exemple une base de données de type classique.

Le serveur 2 est en outre accessible par un terminal mobile 8, également connecté au réseau 4. Dans cet exemple, le terminal mobile 8 est un téléphone mobile de troisième génération supportant le standard de communication classique UMTS, qui lui permet d'échanger des informations avec le serveur 2.

Ce téléphone mobile 8 est par ailleurs connecté avec d'autres terminaux situés dans son voisinage, au moyen d'un réseau local 10 de transmission d'informations. Ces autres terminaux sont par exemple un micro-ordinateur 12, des haut-parleurs 14, un télécopieur 16 et un organiseur personnel numérique 18. Le réseau local 10 est quant à lui, de préférence, un réseau à transmissions hertziennes de communications.

Ces terminaux 8, 12, 14, 16 et 18 sont munis de moyens de communication entre eux à travers le réseau local 10, supportant la technologie classique Bluetooth. Ils forment ainsi un ensemble 20 de terminaux capables d'échanger les informations entre eux par voie hertzienne, classiquement appelé pico-net.

Parmi les terminaux du pico-net, outre le téléphone mobile 8, le télécopieur 16 est connecté au réseau 4 de transmission d'informations, au moyen d'une ligne téléphonique classique, et l'organiseur personnel 18 est également connecté au réseau 4 de transmission d'informations, au moyen d'un canal de transmission d'informations sans fil, supportant le protocole de communication classique WAP.

Le serveur 2 comporte une interface d'entrée/sortie 29, de type classique, adaptée pour l'échange d'informations avec le réseau 4 de transmission d'informations, à destination ou en provenance de l'un des terminaux 8, 12, 14, 16 et 18 et du Web 6.

Ce serveur 2 comporte aussi un moteur de recherche 22 relié à l'interface d'entrée/sortie 29 par un bus de transmission de données de type classique. Ce moteur de recherche 22 peut présenter n'importe quelle structure classique appropriée, par exemple à base de calculateur, pour recevoir des requêtes d'informations de la part du téléphone mobile 8, pour analyser ces requêtes et pour recevoir des informations en provenance du Web 6, en fonction desdites requêtes.

Par exemple, le moteur de recherche 22 comporte un synthétiseur vocal, pour transformer des informations de type textuel en informations sonores, et un système de dictée vocale pour transformer des informations sonores en informations de type textuel.

Le serveur 2 comporte en outre des moyens 24 d'analyse des informations reçues en provenance du Web 6, en réponse à une requête émise par le téléphone mobile 8 et transmise au moteur de recherche 22.

Les moyens d'analyse 24 sont adaptés pour traiter les informations en provenance du Web 6, afin de déterminer la taille en octets et le format de chacune de ces informations.

Les moyens d'analyse 24 peuvent comporter de façon générale, par exemple, des systèmes informatiques programmés pour remplir cette fonction.

Le serveur 2 comporte en outre des moyens d'adaptation 26 des informations en provenance du Web 6 à la structure du pico-net 20. Les moyens d'adaptation 26 sont reliés à l'interface d'entrée/sortie 29, au moteur de recherche 22 et aux moyens d'analyse 24, par un bus de transmission de données.

Ils sont adaptés pour la détermination du ou des terminaux du pico-net 20 les plus appropriés pour le traitement des informations en provenance du Web 6.

Ils possèdent également des moyens classiques de conversion de format (non représentés), pour convertir des informations en provenance du Web 6 et analysées par les moyens d'analyse 24. Leur fonctionnement sera détaillé ultérieurement.

Enfin, le serveur 2 comporte des moyens de routage 28, pour diriger chacune des informations en provenance du Web 6 et répondant à une requête émise par le téléphone mobile 8, vers le ou les terminaux du pico-net 20, déterminés par les moyens d'adaptation 26 comme étant les plus appropriés pour traiter ces informations.

Pour réaliser cette opération, les moyens de routage 28 sont eux aussi reliés à l'interface d'entrée/sortie 29 du serveur 2.

Le téléphone mobile 8 comporte quant à lui une interface d'entrée/sortie 30, pour l'échange d'informations avec le serveur 2, par l'intermédiaire du réseau 4 de transmission d'informations, et pour l'échange d'informations avec les autres terminaux 12, 14, 16 et 18 du pico-net 20, par l'intermédiaire du réseau local 10.

Le téléphone mobile 8 comporte, en outre, des moyens 32 de constitution automatique du réseau local 10.

Ces moyens 32 de constitution automatique comportent, de façon classique, des moyens 34 de détection de terminaux dans un voisinage prédéterminé du téléphone mobile 8, et des moyens 36 de raccordement automatique de ces terminaux, c'est à dire dans cet exemple, le micro-ordinateur 12, les haut-parleurs 14, le télécopieur 16 et l'organiseur personnel numérique 18, au téléphone mobile 8. Ce dernier forme alors le terminal principal du pico-net 20 ainsi constitué.

Les moyens 34 de détection de terminaux sont adaptés pour fournir aux moyens de raccordement 36, l'ensemble des terminaux situés au voisinage du téléphone mobile 8, en réponse à une requête de ce dernier.

Enfin, le téléphone mobile 8 comporte des moyens 38 de détermination de la composition en terminaux 8, 12, 14, 16 et 18 du pico-net 20 et de leurs capacités respectives de traitement d'informations.

Les moyens 32 de constitution automatique du réseau local 10 et les moyens 38 de détermination de la composition en terminaux du pico-net 20, peuvent comporter de façon générale, des systèmes informatiques programmés pour remplir ces fonctions.

De tels systèmes informatiques sont déjà connus dans l'état de la technique, de sorte que l'on ne les décrira pas plus en détail.

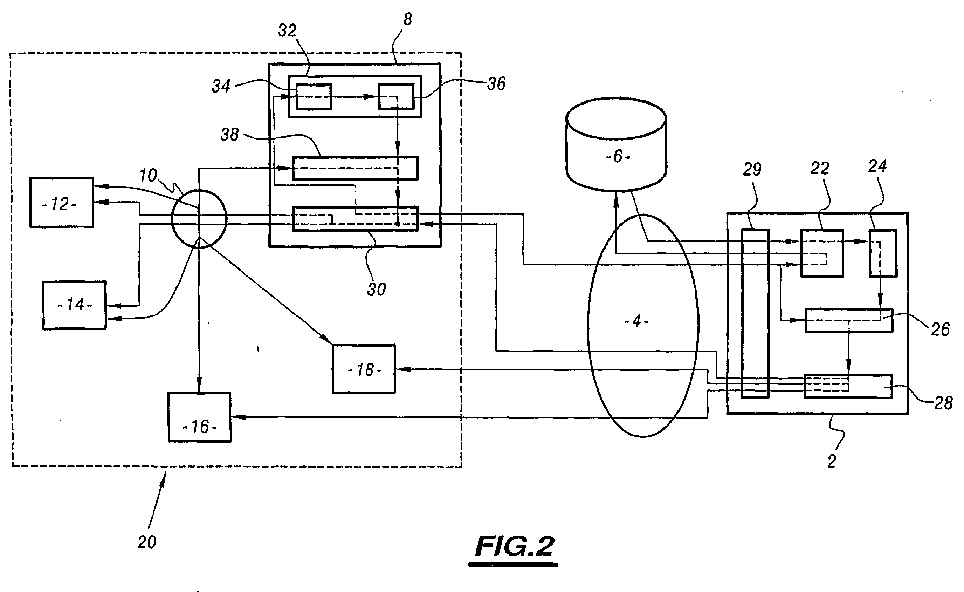

On va maintenant décrire, en référence à la figure 2, les échanges d'informations effectués entre les terminaux du pico-net 20 et le serveur 2, dans le cas d'une requête d'informations émise par le téléphone mobile 8.

Une requête d'informations émise par le téléphone mobile 8 est entrée dans celui-ci par un utilisateur, par exemple manuellement ou oralement.

Lorsque cette requête est enregistrée par l'interface 30 du téléphone mobile 8, celle-ci émet une requête préliminaire d'informations sur la constitution du pico-net 20, aux moyens de détection 34. En réponse, ceux-ci transmettent aux moyens de raccordement 36, des informations sur l'ensemble des terminaux 12,14,16,18, situés au voisinage du téléphone mobile 8.

Les moyens de raccordement 36, après avoir établi ou vérifié la connexion de ces terminaux au téléphone mobile 8, activent les moyens de détermination 38.

Ceux-ci collectent alors des informations de capacité de traitement d'informations de chacun des terminaux 8,12,14,16,18 du réseau local 10 et transmettent ces informations à l'interface 30 du téléphone mobile 8.

Le téléphone mobile 8 transmet alors au serveur 2, la requête d'informations enregistrée par l'interface 30 et associée aux informations de composition en terminaux du réseau local 10 et de leur capacité de traitement d'informations.

Ces données sont transmises par l'interface d'entrée/sortie 29 du serveur 2 d'une part au moteur de recherche 22 en ce qui concerne la requête d'informations et d'autre part aux moyens d'adaptation 26 en ce qui concerne les informations de composition en terminaux du réseau local 10 et de leur capacité de traitement d'informations. Le moteur de recherche 22 interroge alors le Web 6 en fonction de la requête d'informations émise par le téléphone mobile 8.

Des informations en provenance du Web 6 sont récupérées par le moteur de recherche 22, puis fournies aux moyens d'analyse 24.

Ces moyens d'analyse 24, après traitement des informations reçues en réponse à la requête d'informations, fournissent des informations relatives au format et à la taille de chacune de ces informations aux moyens d'adaptation 26.

Les moyens d'adaptation 26 transmettent alors aux moyens de routage 28 les informations reçues en provenance du Web 6, en associant chacune d'entre elles, à des instructions de routage vers un terminal du pico-net 20 sélectionné comme étant le plus approprié pour son traitement.

En fonction de ces instructions, les moyens de routage 28 transmettent chaque information fournie en réponse à la requête d'informations émise par le téléphone mobile 8 au terminal du pico-net 20 sélectionné pour le traitement de cette information.

Les moyens de routage 28 transmettent directement chaque information au terminal concerné, si celui-ci est le télécopieur 16 ou l'organiseur personnel 18 ou le téléphone mobile 8, qui sont tous trois connectés au réseau 4.

Par contre, si le terminal sélectionné pour le traitement de cette information est le micro-ordinateur 12 ou le haut-parleur 14, qui ne sont pas connectés directement au réseau 4, les moyens de routage 28 transmettent cette information à l'interface 30 du téléphone mobile 8, laquelle se charge de transmettre cette information au terminal concerné, à travers le réseau local 10.

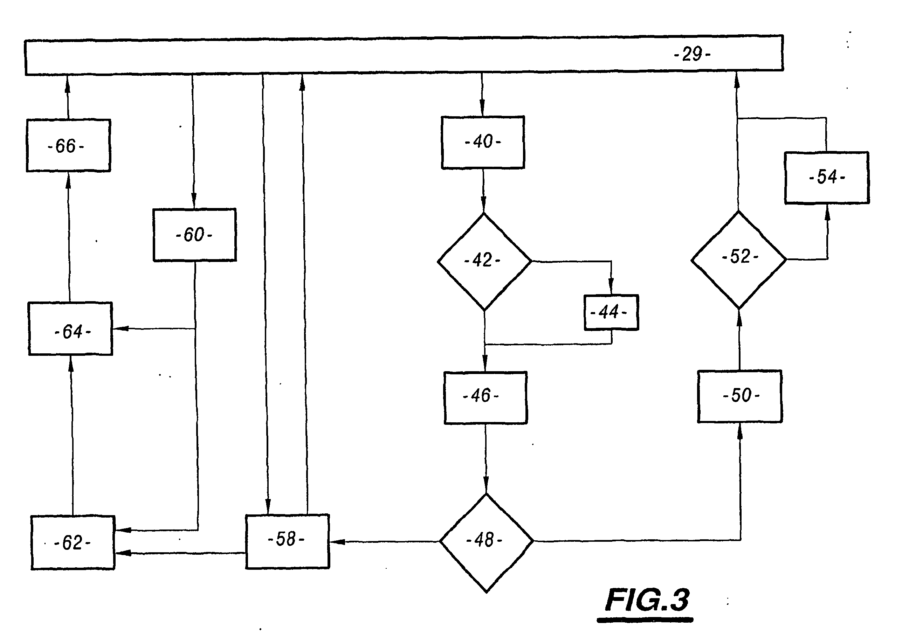

On va maintenant décrire en détail le fonctionnement du serveur 2, dans le cas de la gestion d'une requête d'informations, en référence à la figure 3.

Lorsque l'interface 29 d'entrée/sortie du serveur 2 reçoit une requête d'informations en provenance du téléphone mobile 8, lors d'une première étape 40, elle la transmet au moteur de recherche 22..

Lors d'une étape suivante 42, le moteur de recherche 22 détermine le format de cette requête.

S'il s'agit d'une requête entrée oralement par l'utilisateur du téléphone portable 8, on passe à une étape 44 de transformation de cette requête orale en requête textuelle, suivie d'une étape 46 d'analyse de la requête.

Sinon, si la requête a été entrée manuellement par l'utilisateur sous forme textuelle, on passe directement à l'étape 46 d'analyse de la requête.

Ensuite, lors d'une étape de test 48, le moteur de recherche 22 détermine si la requête est suffisamment claire et précise.

Si c'est le cas, on passe à une étape 58 d'interrogation du Web 6, sinon on passe à une étape 50 de demande de précision.

Lorsque cette demande de précision est élaborée, on passe à une étape 52 de détermination du mode le plus adapté à la demande de précision. Si, lors de cette étape, le mode vocal est choisi par le moteur de recherche 22, on passe à une étape 54 de transformation de la demande de précision, initialement textuelle, en une demande de précision vocale.

Suite aux étapes 52 et 54, la demande de précision est renvoyée au téléphone mobile 8 et donc à l'utilisateur.

La réponse à cette demande de précision est ensuite traitée par le moteur de recherche 22 comme la requête d'informations initiale, au niveau de l'étape 40.

Lors de l'étape 58 d'interrogation du Web 6, le moteur de recherche 22 interroge le Web 6 en fonction de la requête d'informations et reçoit, en provenance du Web 6, des informations multimédia correspondant à cette requête.

Lors de cette même étape 58, le moteur de recherche 22 transmet les informations reçues aux moyens d'analyse 24, qui déterminent leur format et leur taille.

Lors d'une étape 60, l'interface d'entrée/sortie 29 du serveur 2 transmet aux moyens d'adaptation 26, les informations relatives à la configuration du pico-net 20.

Suite aux étapes 58 et 60, lors d'une étape 62 de conversion, les moyens d'adaptation 26 convertissent une partie des informations en provenance du Web 6, reçues à l'étape 58, en fonction des capacités de traitement des différents terminaux 8,12,14,16 et 18, le cas échéant.

En effet, lors de cette étape, les moyens d'adaptation 26 vérifient que, pour chaque information reçue, son format et/ou sa taille sont adaptés aux capacités de traitement d'au moins l'un des terminaux 8, 12,14,16 et 18. Si ce n'est pas le cas, ils convertissent le format et/ou la taille de cette information selon un format et/ou une taille pouvant être traités par l'un desdits terminaux.

Ensuite, lors d'une étape 64 de sélection, les moyens d'adaptation 26 sélectionnent, pour chaque information reçue du Web 6 et éventuellement convertie, le terminal du pico-net 20 le plus adapté à son traitement.

La sélection se fait, par exemple, de façon classique au moyen d'un tableau de correspondance comportant les capacités de traitement de chacun des terminaux du pico-net 20, accessible et mis à jour par les moyens d'adaptation 26 lors de l'étape 60.

Enfin, lors d'une étape 66 de transmission, les moyens de routage 28 transmettent chacune des informations en provenance du Web 6 à chacun des terminaux sélectionné du pico-net 20, soit directement, soit indirectement, comme cela a été décrit précédemment.

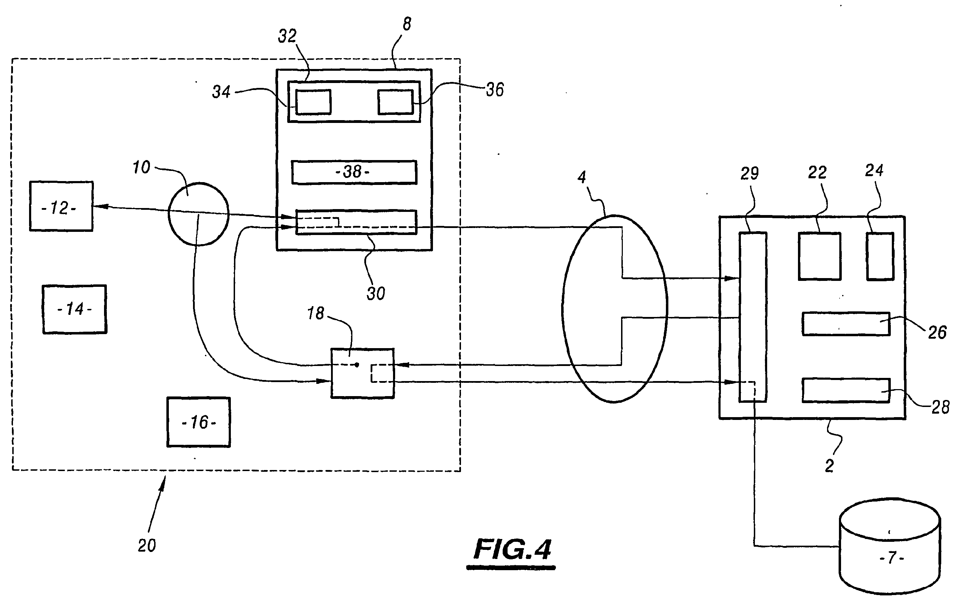

On va maintenant décrire, en référence à la figure 4, les échanges d'informations effectués entre les terminaux du pico-net 20 et le serveur 2, dans le cas d'une transmission d'informations émises par une partie des terminaux 8,12,14,16,18 en direction du serveur 2.

Un ordre de transmission d'informations est par exemple entré manuellement par un utilisateur dans l'organiseur personnel numérique 18. Cet ordre de transmission contient des données d'identification des informations à transmettre et des données d'identification du ou des terminaux du réseau local 10 émetteur de ces informations.

Par exemple, ces informations sont des informations stockées dans le micro-ordinateur 12 et dans l'organiseur personnel numérique 18. Dans ce cas, les moyens d'émission/réception 30 du téléphone mobile 8 collectent les informations à transmettre, par échange de données avec le micro-ordinateur 12 et l'organiseur personnel numérique 18, à travers le réseau local 10.

L'interface 30 du téléphone mobile 8 transmet alors ces informations collectées et rassemblées au serveur 2, à travers le réseau externe 4.

Dès la réception, par l'interface 29, de ces informations, celle-ci renvoie par exemple, directement à l'organiseur personnel numérique 18, un formulaire à remplir par l'utilisateur, qui lui permet de classer ces informations selon certains critères prédéterminés, dans la base de données 7.

L'utilisateur remplit ce formulaire au moyen de son organiseur personnel numérique 18, et le renvoie au serveur 2.

Enfin, l'interface d'entrée/sortie 29 stocke les informations transmises par le téléphone mobile 8 dans la base de données 7, selon le classement prescrit par le formulaire rempli.

Il apparaît donc clairement que le système de gestion d'informations selon l'invention, permet d'améliorer les échanges d'informations pour un réseau de transmission d'informations tel qu'un réseau local 10 de terminaux formant un pico-net 20, en analysant ces informations et en déterminant le ou les terminaux les plus appropriés pour le traitement de ces informations, en fonction de la capacité de traitement de chacun d'entre eux.

II permet en outre d'effectuer simultanément la transmission d'informations en provenance d'une multiplicité de terminaux du réseau local 10, vers le serveur 2, au moyen d'un seul parmi les terminaux du réseau local 10.

On notera enfin que l'invention n'est pas limitée au mode de réalisation décrit.

Ainsi, en variante, le serveur 2 est intégré au terminal mobile 8, lorsque celui-ci a des capacités de traitement suffisantes pour comporter un tel serveur.

## Revendications

1. Système de gestion d'informations, pour un réseau local (10) de transmission d'informations comportant des terminaux (8,12,14,16,18) présentant des capacités de traitement d'informations différentes, comportant au niveau du réseau local (10), dans un terminal principal prédéterminé (8), des premiers moyens (38) de détermination de la composition en terminaux du réseau local (10), afin de déterminer leur nature et leur capacité de traitement d'informations, **caractérisé en ce que** ledit terminal principal déterminé (8) est relié par un réseau externe (4) à un serveur (2) comportant :
- des moyens (22) de recherche d'informations sur le Web (6) en fonction d'une requête émise par le terminal principal (8) ;
- des moyens (24) d'analyse des informations à émettre, en réponse à ladite requête, à destination dudit réseau local (10) ;
- des seconds moyens (26) de détermination du ou des terminaux les plus appropriés pour le traitement de ces informations, en fonction de la capacité de traitement d'informations de chacun de ceux-ci, déterminée par les premiers moyens (38) de détermination et des informations délivrées par les moyens (24) d'analyse des informations à émettre ; et
- des moyens (28) de routage de ces informations permettant de les émettre directement vers le ou les terminaux les plus appropriés tels que déterminés précédemment.

2. Système de gestion d'informations selon la revendication 1, **caractérisé en ce que** les informations émises à destination du réseau local (10) comportent plusieurs portions d'informations de tailles et de formats spécifiques pour chacune d'entre elles, et **en ce que** les seconds moyens de détermination (26) sont des moyens de détermination, pour chacune de ces portions d'informations, du terminal (8,12,14,16,18) le plus approprié pour le traitement de cette portion d'informations, en fonction de la capacité de traitement d'informations de chacun des terminaux, lesdits moyens (28) de routage étant adaptés pour transmettre chaque portion d'informations au terminal le plus approprié tel que déterminé précédemment.

3. Système de gestion d'informations selon la revendication 1 ou 2, **caractérisé en ce que** les moyens (26) d'analyse des informations émises à destination du réseau local (10) sont des moyens d'analyse de formats et de tailles associés à ces informations.

4. Système de gestion d'informations selon l'une quelconque des revendications 1 à 3, **caractérisé en ce que** les terminaux (8,12,14,16,18) sont de natures différentes.

5. Système de gestion d'informations selon la revendication 1, **caractérisé en ce qu'**il comporte des moyens (30) de transmission d'informations en provenance d'une partie des terminaux du réseau local (10) vers des moyens de stockage (7) accessibles par le réseau externe (4).

6. Système de gestion d'informations selon l'une quelconque des revendications 1 à 5, **caractérisé en ce que** les premiers moyens de détermination (38) sont associés à des moyens (32) de constitution automatique du réseau local (10) comportant :
- des moyens (34) de détection de terminaux (12, 14, 16, 18) dans un voisinage prédéterminé du terminal principal (8) ; et
- des moyens (36) de raccordement de ces terminaux et du terminal principal entre eux.

7. Système de gestion d'informations selon la revendication 6, **caractérisé en ce que** les moyens (32) de constitution automatique du réseau local (10) comportent des moyens d'activation des premiers moyens de détermination (34), dès l'apparition d'un changement dans la composition de ce réseau local.

8. Système de gestion d'informations selon l'une quelconque des revendications 1 à 7, **caractérisé en ce que** le terminal principal (8) est un terminal mobile.

9. Système de gestion d'informations selon l'une quelconque des revendications 1 à 8, **caractérisé en ce que** le terminal principal (8) comporte les moyens (32) de constitution automatique du réseau local (10) et des moyens de transmission de la composition en terminaux du réseau local (10) aux seconds moyens (26) de détermination du ou des terminaux les plus appropriés.

10. Procédé de gestion d'informations, pour un réseau local (10) de transmission d'informations comportant des terminaux (8, 12, 14, 16, 18) présentant des capacités de traitement d'informations différentes, le procédé comportant une étape de détermination, au niveau du réseau local, dans un terminal principal prédéterminé (8), de la composition en terminaux du réseau local (10), afin de déterminer leur nature et leur capacité de traitement d'informations, **caractérisé en ce qu'**il comprend en outre les étapes suivantes, réalisées dans un serveur (2), auquel ledit terminal principal (8) est relié par un réseau externe (4) :
- recherche d'informations sur le web en fonction d'une requête émise par le terminal principal (8),
- analyse des informations à émettre, en réponse à ladite requête, à destination dudit réseau local (10),
- détermination du ou des terminaux les plus appropriés pour le traitement de ces informations, en fonction de la capacité de traitement d'informations de chacun de ceux-ci, déterminée à l'étape de détermination et des informations délivrées à l'étape d'analyse des informations à émettre ; et
- routage de ces informations permettant de les émettre directement vers le ou les terminaux les plus appropriés tels que déterminés précédemment.

11. Serveur **caractérisé en ce qu'**il comporte des moyens de connexion par un réseau externe à un terminal principal prédéterminé (8) d'un réseau local comprenant des terminaux (8,12,14,16,18) présentant des capacités de traitement d'informations différents comprenant des premiers moyens (38) de détermination de la composition en terminaux du réseau local, afin de déterminer leur nature et leur capacité de traitement d'informations, ledit serveur comportant en outre :
- des moyens (22) de recherche d'informations sur le Web (6) en fonction d'une requête émise par le terminal principal (8) ;
- des moyens (24) d'analyse des informations à émettre, en réponse à ladite requête, à destination dudit réseau local (10) ;
- des seconds moyens (26) de détermination du ou des terminaux les plus appropriés pour le traitement de ces informations, en fonction de la capacité de traitement d'informations de chacun de ceux-ci, déterminée par les premiers moyens (38) de détermination du terminal principal (8) et des informations délivrées par les moyens (24) d'analyse des informations à émettre ; et
- des moyens (28) de routage de ces informations permettant de les émettre directement vers le ou les terminaux les plus appropriés tels que déterminés précédemment.

12. Programme d'ordinateur comprenant des instructions pour réaliser, lorsqu'exécuté sur le serveur de la revendication 11, les étapes suivantes :
- recherche d'informations sur le web en fonction d'une requête émise par le terminal principal (8),
- analyse des informations à émettre, en réponse à ladite requête, à destination dudit réseau local (10),
- détermination du ou des terminaux les plus appropriés pour le traitement de ces informations, en fonction de la capacité de traitement d'informations de chacun de ceux-ci, déterminée à l'étape de détermination et des informations délivrées à l'étape d'analyse des informations à émettre ; et
- routage de ces informations permettant de les émettre directement vers le ou les terminaux les plus appropriés tels que déterminés précédemment.

13. Terminal **caractérisé en ce qu'**il comporte :
- des premiers moyens de connexion à un serveur (2), par un réseau externe (4) de transmission de données, pour émettre au serveur (2) une requête de recherche d'informations sur le Web,
- des seconds moyens de connexion à un réseau local (10) de transmission d'informations comportant les terminaux (8,12,14,16,18) qui présentent des capacités de traitement différentes,
- des moyens (38) de détermination de la composition en terminaux du réseau local (10), afin de déterminer leur nature et leur capacité de traitement d'informations, et
- des moyens de transmission de la composition en terminaux du réseau local au serveur (2).

14. Programme d'ordinateur comprenant des instructions pour réaliser, lorsqu'exécuté sur le terminal de la revendication 13, les étapes suivantes :
- recherche d'informations sur le web en fonction d'une requête émise par le terminal principal (8),
- analyse des informations à émettre, en réponse à ladite requête, à destination dudit réseau local (10),
- détermination du ou des terminaux les plus appropriés pour le traitement de ces informations, en fonction de la capacité de traitement d'informations de chacun de ceux-ci, déterminée à l'étape de détermination et des informations délivrées à l'étape d'analyse des informations à émettre ; et
- routage de ces informations permettant de les émettre directement vers le ou les terminaux les plus appropriés tels que déterminés précédemment.

## Claims

1. Information management system for a local area data network (10) comprising terminals (8, 12, 14, 16, 18) having different information processing capabilities, comprising on the local area network (10), in a predetermined main terminal (8), first means (38) of determining the terminal composition of the local area network (10), in order to determine the nature of the terminals and their information processing capability, **characterized in that** said predetermined main terminal (8) is linked by an external network (4) to a server (2) comprising:
- means (22) of searching for information on the Web (6) according to a request sent by the main terminal (8);
- means (24) of analysing the information to be sent, in response to said request, to said local area network (10);
- second means (26) of determining the most appropriate terminal or terminals for processing this information, according to the information processing capability of each of them, determined by the first determination means (38) and information delivered by the means (24) of analysing the information to be sent; and
- means (28) of routing this information, enabling it to be sent directly to the most appropriate terminal or terminals as determined previously.

2. Information management system according to Claim 1, **characterized in that** the information sent to the local area network (10) comprises a number of portions of information of sizes and formats that are specific to each of them, and **in that** the second determination means (26) are means of determining, for each of these portions of information, the most appropriate terminal (8, 12, 14, 16, 18) for processing this portion of information, according to the information processing capability of each of the terminals, said routing means (28) being suitable for transmitting each portion of information to the most appropriate terminal as determined previously.

3. Information management system according to Claim 1 or 2, **characterized in that** the means (26) of analysing the information sent to the local area network (10) are means of analysing formats and sizes associated with this information.

4. Information management system according to any one of Claims 1 to 3, **characterized in that** the terminals (8, 12, 14, 16, 18) are of different types.

5. Information management system according to Claim 1, **characterized in that** it comprises means (30) of transmitting information from some of the terminals of the local area network (10) to storage means (7) accessible by the external network (4).

6. Information management system according to any one of Claims 1 to 5, **characterized in that** the first determination means (38) are associated with means (32) of automatically constructing the local area network (10) comprising:
- means (34) of detecting terminals (12, 14, 16, 18) in a predetermined vicinity of the main terminal (8); and
- means (36) of interconnecting these terminals and the main terminal.

7. Information management system according to Claim 6, **characterized in that** the means (32) of automatically constructing the local area network (10) comprise means of activating first determination means (34), immediately a change appears in the composition of this local area network.

8. Information management system according to any one of Claims 1 to 7, **characterized in that** the main terminal (8) is a mobile terminal.

9. Information management system according to any one of Claims 1 to 8, **characterized in that** the main terminal (8) comprises means (32) of automatically constructing the local area network (10) and means of transmitting the terminal composition of the local area network (10) to the second means (26) of determining the most appropriate terminal or terminals.

10. Information management method for a local area data network (10) comprising terminals (8, 12, 14, 16, 18) having different information processing capabilities, the method comprising a step of determining, on the local area network, in a predetermined main terminal (8), the terminal composition of the local area network (10), in order to determine the nature of the terminals and their information processing capability, **characterized in that** it further comprises the following steps, which are carried out in a server (2) to which said predetermined main terminal (8) is linked by an external network (4):
- search for information on the Web according to a request sent by the main terminal (8);
- analysis of the information to be sent, in response to said request, to said local area network (10);
- determination of the most appropriate terminal or terminals for processing this information, according to the information processing capability of each of them, determined during the determination step and information delivered during the step of analysing the information to be sent; and
- routing of this information, enabling it to be sent directly to the most appropriate terminal or terminals as determined previously.

11. Server **characterized in that** it comprises means of connection via an external network to a predetermined main terminal (8) of a local area network comprising terminals (8, 12, 14, 16, 18) having different information processing capabilities comprising first means (38) of determining the terminal composition of the local area network, in order to determine the nature of the terminals and their information processing capability, said server also comprising:
- means (22) of searching for information on the Web (6) according to a request sent by the main terminal (8);
- means (24) of analysing the information to be sent, in response to said request, to said local area network (10);
- second means (26) of determining the most appropriate terminal or terminals for processing this information, according to the information processing capability of each of them, determined by the first determination means (38) of the main terminal (8) and information delivered by the means (24) of analysing the information to be sent; and
- means (28) of routing this information, enabling it to be sent directly to the most appropriate terminal or terminals as determined previously.

12. Computer program comprising instructions for carrying out, when executed on the server of Claim 11, the following steps:
- search for information on the Web according to a request sent by the main terminal (8);
- analysis of the information to be sent, in response to said request, to said local area network (10);
- determination of the most appropriate terminal or terminals for processing this information, according to the information processing capability of each of them, determined during the determination step and information delivered during the step of analysing the information to be sent; and
- routing of this information, enabling it to be sent directly to the most appropriate terminal or terminals as determined previously.

13. Terminal **characterized in that** it comprises:
- first means of connecting to a server (2), via an external data transmission network (4), for sending to the server (2) a request to search for information on the Web,
- second means of connecting to a local area data transmission is understood in "datanetwork" network (10) comprising terminals (8, 12, 14, 16, 18) having different processing capabilities,
- means (38) of determining the terminal composition of the local area network (10) in order to determine the nature of the terminals and their information processing capability, and
- means of transmitting the terminal composition of the local area network to the server (2).

14. Computer program comprising instructions for carrying out, when executed on the terminal of Claim 13, the following steps:
- search for information on the Web according to a request sent by the main terminal (8);
- analysis of the information to be sent, in response to said request, to said local area network (10);
- determination of the most appropriate terminal or terminals for processing this information, according to the information processing capability of each of them, determined during the determination step and information delivered during the step of analysing the information to be sent; and
- routing of this information, enabling it to be sent directly to the most appropriate terminal or terminals as determined previously.

## Patentansprüche

1. Informationsverwaltungssystem für ein lokales Informationsübertragungsnetzwerk (10), das Endgeräte (8, 12, 14, 16, 18) mit unterschiedlichen Informationsverarbeitungskapazitäten aufweist, das in Höhe des lokalen Netzwerks (10) in einem vorbestimmten Haupt-Endgerät (8) erste Mittel (38) zur Bestimmung der Endgeräte-Zusammensetzung des lokalen Netzwerks (10) aufweist, um ihre Beschaffenheit und ihre Informationsverarbeitungskapazität zu bestimmen, **dadurch gekennzeichnet, dass** das Haupt-Endgerät (8) über ein externes Netzwerk (4) mit einem Server (2) verbunden ist, der aufweist:
- Mittel (22) zur Suche nach Informationen im Internet (6) in Abhängigkeit von einer vom Haupt-Endgerät (8) gesendeten Anfrage;
- Mittel (24) zur Analyse der als Antwort auf die Anfrage an das lokale Netzwerk (10) zu sendenden Informationen;
- zweite Mittel (26) zur Bestimmung des Endgeräts oder der Endgeräte, die für die Verarbeitung dieser Informationen am besten geeignet sind, in Abhängigkeit von der Informationsverarbeitungskapazität jedes dieser Geräte, die von den ersten Bestimmungsmitteln (38) bestimmt wird, und von den Informationen, die von den Mitteln (24) zur Analyse der zu sendenden Informationen geliefert werden; und
- Mittel (28) zum Routen dieser Informationen, die es ermöglichen, sie direkt zu dem am besten geeigneten Endgerät oder den am besten geeigneten Endgeräten zu senden, wie sie vorher bestimmt wurden.

2. Informationsverwaltungssystem nach Anspruch 1, **dadurch gekennzeichnet, dass** die an das lokale Netzwerk (10) gesendeten Informationen mehrere Informationsabschnitte mit jeweils spezifischen Größen und Formaten aufweisen, und dass die zweiten Bestimmungsmittel (26) für jeden dieser Informationsabschnitte Bestimmungsmittel des Endgeräts (8, 12, 14, 16, 18) sind, das abhängig von der Informationsverarbeitungskapazität jedes der Endgeräte für die Verarbeitung dieses Informationsabschnitts am besten geeignet ist, wobei die Routingmittel (28) ausgelegt sind, um jeden Informationsabschnitt an das am besten geeignete Endgerät zu übertragen, wie es vorher bestimmt wurde.

3. Informationsverwaltungssystem nach Anspruch 1 oder 2, **dadurch gekennzeichnet, dass** die Mittel (26) zur Analyse der Informationen, die an das lokale Netz (10) gesendet werden, Mittel zur Analyse von diesen Informationen zugeordnet Formaten und Größen sind.

4. Informationsverwaltungssystem nach einem der Ansprüche 1 bis 3, **dadurch gekennzeichnet, dass** die Endgeräte (8, 12, 14, 16, 18) von unterschiedlicher Beschaffenheit sind.

5. Informationsverwaltungssystem nach Anspruch 1, **dadurch gekennzeichnet, dass** es Mittel (30) zur Übertragung von von einem Teil der Endgeräte des lokalen Netzwerks (10) kommenden Informationen zu Speichermitteln (7) aufweist, die über das externe Netzwerk (4) zugänglich sind.

6. Informationsverwaltungssystem nach einem der Ansprüche 1 bis 5, **dadurch gekennzeichnet, dass** die ersten Bestimmungsmittel (38) Mitteln (32) zur automatischen Bildung des lokalen Netzes (10) zugeordnet sind, die aufweisen:
- Mittel (34) zur Erfassung von Endgeräten (12, 14, 16, 18) in einer vorherbestimmten Nachbarschaft des Haupt-Endgeräts (8); und
- Mittel (36) zur Verbindung dieser Endgeräte und des Haupt-Endgeräts miteinander.

7. Informationsverwaltungssystem nach Anspruch 6, **dadurch gekennzeichnet, dass** die Mittel (32) zur automatischen Bildung des lokalen Netzwerks (10) Mittel zur Aktivierung der ersten Bestimmungsmittel (34) beim Auftreten einer Veränderung in der Zusammensetzung dieses lokalen Netzwerks aufweisen.

8. Informationsverwaltungssystem nach einem der Ansprüche 1 bis 7, **dadurch gekennzeichnet, dass** das Haupt-Endgerät (8) ein mobiles Endgerät ist.

9. Informationsverwaltungssystem nach einem der Ansprüche 1 bis 8, **dadurch gekennzeichnet, dass** das Haupt-Endgerät (8) die Mittel (32) zur automatischen Bildung des lokalen Netzwerks (10) und Mittel zur Übertragung der Endgeräte-Zusammensetzung des lokalen Netzwerks (10) an die zweiten Mittel (26) zur Bestimmung des oder der am besten geeigneten Endgeräte aufweist.

10. Informationsverwaltungsverfahren für ein lokales Informationsübertragungsnetzwerk (10), das Endgeräte (8, 12, 14, 16, 18) mit unterschiedlichen Informationsverarbeitungskapazitäten aufweist, wobei das Verfahren in Höhe des lokalen Netzwerks in einem vorbestimmten Haupt-Endgerät (8) einen Schritt zur Bestimmung der Endgeräte-Zusammensetzung des lokalen Netzwerks (10) aufweist, um ihre Beschaffenheit und ihre Informationsverarbeitungskapazität zu bestimmen, **dadurch gekennzeichnet, dass** es weiterhin folgende Schritte umfasst, die in einem Server (2) ausgeführt werden, mit dem das Haupt-Endgerät (8) über ein externes Netzwerk (4) verbunden ist:
- Suche nach Informationen im Internet in Abhängigkeit von einer vom Haupt-Endgerät (8) gesendeten Anfrage,
- Analyse der als Antwort auf die Anfrage an das lokale Netzwerk (10) zu sendenden Informationen,
- Bestimmung des Endgeräts oder der Endgeräte, die für die Verarbeitung dieser Informationen am besten geeignet sind, in Abhängigkeit von der Informationsverarbeitungskapazität jedes dieser Geräte, die während des Bestimmungsschritts bestimmt wird, und von den Informationen, die während des Schritts zur Analyse der zu sendenden Informationen geliefert werden, und
- Routen dieser Informationen, die es ermöglichen, sie direkt zu dem am besten geeigneten Endgerät oder den am besten geeigneten Endgeräten zu senden, wie sie vorher bestimmt wurden.

11. Server, **dadurch gekennzeichnet, dass** er Mittel zur Verbindung über ein externes Netzwerk mit einem vorbestimmten Haupt-Endgerät (8) eines Endgeräte (8, 12, 14, 16, 18) mit unterschiedlichen Informationsverarbeitungskapazitäten enthaltenden lokalen Netzwerks aufweist, das erste Mittel (38) zur Bestimmung der Endgeräte-Zusammensetzung des lokalen Netzwerks aufweist, um ihre Beschaffenheit und ihre Informationsverarbeitungskapazität zu bestimmen, wobei der Server weiter aufweist:
- Mittel (22) zur Suche nach Informationen im Internet (6) in Abhängigkeit von einer vom Haupt-Endgerät (8) gesendeten Anfrage;
- Mittel (24) zur Analyse der als Antwort auf die Anfrage an das lokale Netzwerk (10) zu sendenden Informationen;
- zweite Mittel (26) zur Bestimmung des Endgeräts oder der Endgeräte, die für die Verarbeitung dieser Informationen am besten geeignet sind, in Abhängigkeit von der Informationsverarbeitungskapazität jedes dieser Geräte, die von den ersten Bestimmungsmitteln (38) des Haupt-Endgeräts (8) bestimmt wird, und von den Informationen, die von den Mitteln (24) zur Analyse der zu sendenden Informationen geliefert werden; und
- Mittel (28) zum Routen dieser Informationen, die es ermöglichen, sie direkt zu dem oder den am besten geeigneten Endgeräte zu senden, wie sie vorher bestimmt wurden.

12. Computerprogramm mit Anweisungen zur Durchführung folgender Schritte, wenn es auf dem Server nach Anspruch 11 ausgeführt wird:
- Suche nach Informationen im Internet in Abhängigkeit von einer vom Haupt-Endgerät (8) gesendeten Anfrage,
- Analyse der als Antwort auf die Anfrage an das lokale Netzwerk (10) zu sendenden Informationen,
- Bestimmung des Endgeräts oder der Endgeräte, die für die Verarbeitung dieser Informationen am besten geeignet sind, in Abhängigkeit von der Informationsverarbeitungskapazität jedes dieser Geräte, die während des Bestimmungsschritts bestimmt wird, und von den Informationen, die während des Schritts zur Analyse der zu sendenden Informationen geliefert werden, und
- Routen dieser Informationen, die es ermöglichen, sie direkt zu dem am besten geeigneten Endgerät oder den am besten geeigneten Endgeräten zu senden, wie sie vorher bestimmt wurden.

13. Endgerät, **dadurch gekennzeichnet, dass** es aufweist:
- erste Mittel zur Verbindung mit einem Server (2) über ein externes Datenübertragungsnetzwerk (4), um an den Server (2) eine Anfrage zur Informationssuche im Internet zu senden,
- zweite Mittel zur Verbindung mit einem lokalen Informationsübertragungsnetzwerk (10), das die Endgeräte (8, 12, 14, 16, 18) aufweist, die unterschiedliche Verarbeitungskapazitäten haben,
- Mittel (38) zur Bestimmung der Endgeräte-Zusammensetzung des lokalen Netzes (10), um ihre Beschaffenheit und ihre Informationsverarbeitungskapazität zu bestimmen, und
- Mittel zur Übertragung der Endgeräte-Zusammensetzung des lokalen Netzwerks an den Server (2).

14. Computerprogramm mit Anweisungen zur Durchführung folgender Schritte, wenn es auf dem Endgerät nach Anspruch 13 ausgeführt wird:
- Suche nach Informationen im Internet in Abhängigkeit von einer vom Haupt-Endgerät (8) gesendeten Anfrage,
- Analyse der als Antwort auf die Anfrage an das lokale Netzwerk (10) zu sendenden Informationen,
- Bestimmung des Endgeräts oder der Endgeräte, die für die Verarbeitung dieser Informationen am besten geeignet sind, in Abhängigkeit von der Informationsverarbeitungskapazität jedes dieser Geräte, die während des Bestimmungsschritts bestimmt wird, und von den Informationen, die während des Schritts zur Analyse der zu sendenden Informationen geliefert werden, und
- Routen dieser Informationen, die es ermöglichen, sie direkt zu dem am besten geeigneten Endgerät oder den am besten geeigneten Endgeräten zu senden, wie sie vorher bestimmt wurden.
